# EUROPEAN PATENT SPECIFICATION

(11) **EP 4 246 797 B1**
(45) Date of publication and mention of the grant of the patent: **16.07.2025**
(21) Application number: 22425011.8
(22) Date of filing: 16.03.2022
(51) Int. Cl.: H02P 1/42, H02P 29/032, F25B 49/02, F25B 49/00

(54) **A CONTROLLER FOR REFRIGERATORS COMPRESSORS AND A CONTROL METHOD FOR SUCH CONTROLLER**
STEUERUNG FÜR KÜHLKOMPRESSOREN UND EIN STEUERUNGSVERFAHREN FÜR EINE SOLCHE STEUERUNG
ORGANE DE COMMANDE POUR COMPRESSEURS DE RÉFRIGÉRATEURS ET PROCÉDÉ DE COMMANDE POUR UN TEL ORGANE DE COMMANDE

(43) Date of publication of application: 20.09.2023
(73) Proprietor: B.D.G. el S.r.l., 21020 Bardello (IT)
(72) Inventor: Mazzani, Luigi, 21100 VARESE (IT); Bossi, Alessandro, 21014 LAVENO MOMBELLO (VARESE) (IT)
(74) Representative: Tarabbia, Luigi

(56) References cited:
- EP-A2- 2 458 728
- US-A1- 2008 225 447

## Description

The present invention relates to a so-called "controller device" adapted to control the starting and running of an electric motor (for example, an induction motor), where said induction motor can be a motor of a compressor in a refrigeration system (or other, according to the needs of the moment). The present invention further relates to a control method, a computer program and for example a so-called "user" or "user apparatus" (by way of non-limiting example a compressor) functionally and structurally connectable and/or correlatable to such a controller device.

In terms of technical application, the present invention can be applied in the field of controllers for compressors, in particular for compressors of refrigeration systems (or other): in more detail, the present invention can be applied in compressors in the field of domestic refrigeration with single-phase motors (with starting and running windings, with or without capacitors).

Furthermore, the present invention can also be used in the field of commercial compressors used in refrigerated counters with single-phase motors (with starting and running windings, with or without capacitors).

As is known, compressors for refrigeration systems are particular electromechanical machinery served by at least one electric motor, and such an electric motor is generally characterized by the presence of two separate electric windings: a "starting" winding, to provide the necessary power at the beginning of the rotation of the rotor and a "running" winding used, both when the motor is running at full speed, to maintain the desired rotor drive torque, and at the beginning/starting (in this case the running winding is used/excited in parallel with the starting winding).

In compressors, or more generally in machinery based on induction electric motors, at the end of the starting phase it is typical to disconnect the starting winding from the power supply (i.e., the so-called "starting current" must no longer flow through such a winding), since otherwise, it could finish in an overheating condition (or more generally, in other types of problems), which could compromise the integrity and, consequently, the correct operation thereof.

Currently, the protections of refrigerator compressors envisage the use of more or less optimized and variable amperometric controls depending on the shape or their application, such as thermo-amperometric devices (in technical industry jargon, overload protector or "OLP") and as purely amperometric devices (fuses).

In practice, the above protections are closed contacts which open at the onset of a state of danger.

In other words, the prior art generally envisages the use of "amperometric" devices capable of performing the function of switch/controller: at the moment when the motor terminates the starting phase, the current of the running circuit is insufficient for maintaining the excitation of the relay and consequently the latter, modifying its operating condition, goes to open the power supply circuit of the starting winding (N.B.: for completeness of framing the prior art, it can also be mentioned that a completely similar discussion can be made for so-called "voltmetric relays").

Similar devices are described in documents such as EP2458728A2 and US2008/225447A1.

Such devices, however, in addition to being rather expensive, are disadvantageous both from a construction point of view (consisting of moving mechanical parts), and from the point of view of adaptability (having to be specifically and uniquely sized for each individual type of compressor known or available on the market today).

Alternatively, control circuits using variable resistance resistors (so-called "PTC thermistors") are known. This type of resistor is associated with the starting winding and conducts the electric current until the temperature of the resistor remains below a certain value (defined as "Curie point"). Conversely, when the PTC temperature rises above the critical threshold, the thermistor increases its resistance, interrupting the power supply to the winding, thus ending the starting phase.

The motor used by the compressor also requires a second control system, which is operational in steady-state conditions: such a second control system is mainly responsible for detecting a possible "amperometric load", which in turn causes an overheating of the compressor in order to interrupt the operation thereof (to avoid damage to the electrical insulation of the motor itself and/or to the entire structure of the compressor).

Problems of this kind can arise, for example, as a result of excessive requests from the system (typically, if the doors haven't been closed correctly or if objects are placed inside the system at an overly high temperature), or as a result of mechanical faults of the motor (for example, rotor locking).

In general, however, the excessive increase in the temperature of the compressor is due to an electrical overload condition in which the compressor itself is operating: therefore, to date, active type protections are used, i.e., which intervene as a reaction to a state of danger. Disadvantageously, the active protections do not always work properly, leaving some residual risk.

Furthermore, the protections used to date have a high specificity depending on the structural and design features of the compressor.

Disadvantageously, such a specificity leads to the production of a large number of different models (or "product codes") and the logistical organization linked to large mass production is very complicated and both factors cause an increase in costs, as well as an increased risk factor in terms of ensuring a homogeneous level of quality in production.

The technical task of the present invention is therefore to provide a controller device, a control method and software (and by extension, a compressor and/or a motor associated with such a controller and/or such a control method and/or such software) which are capable of overcoming the drawbacks arising from the prior art.

The object of the present invention is therefore to provide a controller device, a control method and software which allow to intervene before the occurrence of the state of danger.

A further object of the present invention is therefore to provide a controller device, a control method and software which make it possible to prevent the state of danger from degenerating.

Furthermore, an object of the present invention is therefore to provide a controller device, a control method, and software which are easily adaptable universally to different compressor types and/or models.

The specified technical task and the specified objects are substantially achieved by a controller device, a control method and software comprising the technical features set out in one or more of the appended claims. The dependent claims correspond to possible embodiments of the invention.

In particular, the technical task specified and the objects specified are substantially achieved by a controller device, adapted to control the starting and running of an induction motor, where the induction motor is preferably a motor of a compressor in a refrigeration system (or other).

The controller device comprises a control element, which can be activated on a motor of a compressor to regulate the starting and running thereof and comprises a detection element to measure one or more of the so-called "operating electrical parameters" (currents, voltages or even temperatures or any other physical quantity measurable or derivable from a functional state of such a motor and/or compressor) and a memory to store the values related to said operating electrical parameters; the device further comprises switching means operatively serving the control element and capable of being controlled to allow and stop a current flow to a starting winding and/or to a running winding respectively of the motor (which for example can be of the "induction" type).

The device further comprises a safety means controllable by the control element for opening or closing an induction motor supply circuit.

The control element is adapted to:
- close the safety means (which is in a "normally open" circuit condition) before an amperometric load is activated;
- perform a check, according to a logic of preventive intervention and continuously over time, of the correct operation of the control element itself (so that if the check shows that the control element is not functioning properly, the safety means would be left to return to the "normally open" condition, otherwise it would remain closed);

- supply the running winding;
- store an initial value of a current flow (of the starting winding and/or running winding, according to the needs of the moment);
- supply the starting winding to start the motor;
- monitor a current value of the motor current flow and compare it as a function of the initial value of the above-mentioned current flow; and
- interrupt the power supply of the motor if the monitoring shows that the operating electrical parameters are inconsistent or different from those considered "safe" (for example, if it is found that the current flow is greater than a predetermined value percentage of the initial current flow value).

The technical task specified and the objects specified are also achieved by a control method, by means of the use of a device mentioned above, adapted to control the starting and running of an induction motor, where the induction motor is preferably a motor of a compressor in a refrigeration system.

The method comprises the steps of:
- closing the safety means before activating the amperometric load;
- performing a check on the correct operation of the control element itself, if the check shows that the control element is not working properly, the safety means would be opened, otherwise it would remain closed;
- supplying the running winding;
- storing an initial operating electrical parameter value (e.g., parameters related to a current flow of the running winding);
- supplying the starting winding to start said motor;
- monitoring a current value of the motor current flow and comparing it as a function of the initial value of the running winding current flow; and
- interrupting the supply of the motor if the monitoring shows that the current flow is greater than a predetermined value with respect to an initial value of such operating electrical parameters (e.g., the above-mentioned current flow value).

The specified technical task and the specified objects are also achieved by a computer program including instructions for performing the steps of the method above. Preferably, the software is installed or can be installed in said control element.

The specified technical task and the specified objects are also achieved by a compressor, in particular for refrigeration systems, comprising a controller device mentioned above.

Further features and advantages of the present invention will become more apparent from the description of an exemplary, but not exclusive, and therefore non-limiting preferred embodiment of a controller device, a control method, software and a compressor.

Such a description will be set out hereinafter with reference to the accompanying drawings given only for illustrative and, therefore, non-limiting purpose, in which:

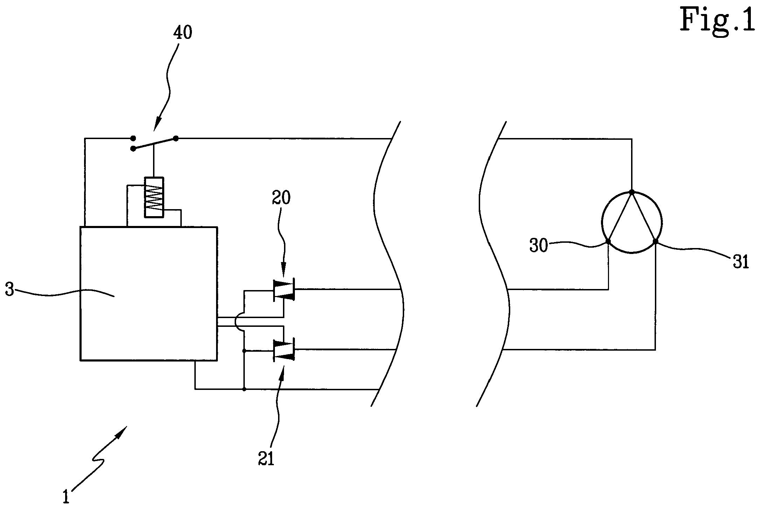

- Figure 1 is a schematic depiction of the device object of the present invention.

With reference to the accompanying drawings, 1 globally indicates a controller device 1 adapted to control the starting and running of an induction motor, where the induction motor is preferably a motor of a compressor in a refrigeration system.

The controller device 1 according to the present invention is capable of operating, by virtue of its "integrated" structure, both to control the start of the compressor (or of the induction motor) and to control any overload conditions while running.

For greater clarity, in the course of the present disclosure reference may be made indifferently to a compressor or an induction motor, without however limiting the scope of the invention.

The device 1 adjusts the starting of the compressor in order to prevent sudden failures and in order to interdict the supply to a starting winding 30 (but according to the needs of the moment it can also interdict the supply of a so-called "running winding") of the compressor at the moment when the starting phase ends.

Furthermore, during the running of the compressor, the device 1 prevents the compressor from being supplied at critical or potentially dangerous conditions or even prevents the winding temperatures from becoming too high.

The controller device 1 comprises a control element 3 which can be activated on a motor of a compressor to regulate the starting and running thereof.

Furthermore, the controller device 1 comprises switching means 20, 21 operatively serving the control element 1 and capable of being controlled to allow and stop a current flow to a starting winding 30 and/or to a running winding 31 of said induction motor, respectively. In the continuation of the present description, the terms starting winding 30 and starting circuit as well as running winding 31 and running circuit are interchangeable for the purposes of how the controller device 1 operates.

Preferably, each of the switching means 20, 21 are circuitally associated at least with the control element 3 and are drivable by the latter between a first operating condition, in which an inflow of a supply current is allowed to the starting winding 30 and/or the running winding 31, and a second operating configuration, in which it prevents the inflow of the supply current to the starting winding 30 and/or the running winding 31.

Preferably, each of the switching means 20, 21 has a first end, which can be connected to one end of the starting winding 30 and/or of the running winding 31 and a second end, which is arranged to receive a control signal from the control element 3.

Therefore, the control signal is configured to force the switching means 20, 21 to go between the first and the second operating condition.

Preferably, the switching means comprise at least one semiconductor element.

Preferably, the semiconductor element is a triac and the second ends are a gate of the triac: therefore, the two triacs (or functionally equivalent electronic devices) perform a "driving" function for both starting and running the motor/compressor.

From a structural point of view, the controller can be made in various ways according to needs, for example, it can consist of microprocessors or circuit logic elements which can be combined with each other according to the needs of the moment.

The control element 3 comprises a detection element for measuring the operating electrical parameters mentioned several times above and a memory for storing a measurement of said operating electrical parameters. In other words, the control element effectively defines a control unit of the controller device 1 for the constant control of the compressor motor.

The measurement is therefore of the electrical type and, for example, of the amperometric type (but according to the needs of the moment, it can also be of the "mixed" type, i.e., for example of the voltmetric type).

The controller device 1 further comprises a safety means 40 controllable by the control element 3 for opening or closing an induction motor supply circuit.

Preferably, the safety means 40 is made in the form of a relay as shown in figure 1 (or more generally, in the form of an electrical contact which can be physically opened or interrupted, such as a so-called "fuse").

In the continuation of the present description, the term "relay" will be used to describe the embodiment of figure 1, however, it should be noted that what will be described is also applicable in the case in which the safety means 40 is any means for opening or closing the power supply circuit.

The control element 3 is configured to close the safety means 40 before an amperometric load activation: such an operation occurs at the instant "zero", when the thermostat of the refrigerator closes (thereby, the relay contact closes without an amperometric load in order not to cause sparks). The control element 3 is also configured to perform a check of a correct operation of the control element 3 itself: if the check shows that the control element 3 is not operating (due to hardware or software problems), the safety means 40 would be opened, otherwise it would remain closed.

Preferably, the control element 3 is configured to keep the safety means 40 closed and perform the check of the correct operation of the control element 3 itself for a predetermined time comprised in a "reasonable" time (for example, between 0 milliseconds and 1000 milliseconds) before supplying the running winding 31.

Even more preferably, the control element 3 is configured to keep the safety means 40 closed and perform the check of the correct operation of the control element 3 itself for a predetermined time suitable for the purpose (for example, 250 milliseconds): in other words, the control element 3 performs in the aforementioned predetermined period of time a self-test which, if there are no problems, keeps the relay closed.

Preferably, the control element 3 is configured to open the safety means 40 after a predetermined delay from the interruption of the power supply: in other words, the relay is opened with a slight delay after the end of the power supply to open without amperometric load.

The control element 3 is also configured to supply one or both of the windings 30 and/or 31: such an operation occurs by sending a control signal to the switching means 20, 21, i.e., to the triacs.

In other words, after the aforementioned predetermined time period (e.g., after the first 250 milliseconds) and after the self-test, the control element 3 allows to supply the running circuit of the compressor.

The control element 3 is further configured to store an initial value of operating electrical parameters (e.g., electrical parameters related to a current flow) of the running winding 31 by using the above memory.

Preferably, the control element 3 is configured to store the initial value of such electrical parameters operating at the running winding 31 for a storage time which is functionally consistent with the technical purposes of the invention (e.g., such a storage time can be between 0 milliseconds and 1000 milliseconds and, again for example, can be 100 milliseconds). Even more preferably, the control element 3 is configured to store the initial value of the operating electrical parameters at the running winding 31 for the aforementioned storage time.

The control element 3 is also configured to supply the starting winding 30 to start the motor.

Preferably, the control element 3 is configured to supply the starting winding 30 for a predetermined starting time. Even more preferably, the predetermined starting time is 1 second.

Alternatively, the control element 3 is configured to supply the starting winding 30 for a variable starting time. Even more preferably, the variable starting time is a function of the operating electrical parameters mentioned several times above.

In other words, the device waits for a further "reasonable" period of time (e.g., equal to another 100 milliseconds), during which it stores (via memory) the value of the initial operating electrical parameters of the running circuit 31 and then supplies the starting circuit 30 for a time of about 1 second to start the compressor.

The time of 1 second can be fixed or variable according to the most suitable "electrical conditions" existing in the motor/compressor (or in other words, according to the so-called "operating electrical parameters").

The control element 3 is also configured to monitor a current value of the operating electrical parameters of the motor and compare it as a function of the initial value of those same electric operating parameters of the running winding 31.

The control element 3 is also configured to stop supplying power to the motor if the monitoring shows that the current flow is greater than a predetermined value percentage of the initial value.

Current value is intended as the value of the operating electrical parameters measured after the initial phase which occurs during the storage operation.

Preferably, the control element 3 is configured to monitor for example that the current value of the current flow is not greater than a predetermined value: such a value is established as a function of the initial operating electrical parameters (being for example equal to 65% of the initial value of the current flow for a monitoring time of 4 seconds).

In other words, if the current value is greater than the predetermined value, this means that the rotor is locked and therefore the control element 3 interrupts the power supply of the running winding 31 (such interruption occurs after a suitable period of time for the purposes of the invention, such as a time of 4 seconds from the occurrence of such condition).

Preferably, the control element 3 is configured to monitor that the current value of the operating electrical parameters (such as the current flow) is not between appropriate and predetermined "thresholds" (for example, between 35% and 65% of the initial value of the current flow) for a monitoring time which in turn can be fixed or proportional to the operating electrical parameters themselves.

If the current value falls within the above-mentioned thresholds, this implies the occurrence of an overload situation: therefore, if such an overload situation remains beyond a certain period of time, the running power supply must necessarily be interrupted by the control element.

If, on the other hand, the current value is below a so-called "overload threshold" (which can for example be 35% or possibly a variant between 30% and 40%), the control element 3 does not intervene.

Thereby, the protection function is performed only by the control element 3 without opening physical contacts.

Advantageously, the storage of the initial operating electrical parameters (for example, of the initial amps circulating in the running winding) allows the device 1 (i.e., the control element 3) to self-calibrate on the motor to which it is applied: in other words, the control element 3 is calibrated from time to time on the specific compressor and/or motor.

Therefore, the controller device 1 is advantageously to be understood as a "universal" device, i.e., as a device applicable substantially immediately and without requiring modifications or adaptations of its structure to any type of compressor in the field of domestic refrigeration (although as is well evident in the spirit of the invention, such a device is also applicable to motors and/or compressors used outside of so-called "household refrigeration").

Preferably, the control element 3 is configured to perform said control of the correct operation in a continuous and pulsatile manner and to keep the safety means 40 closed as long as the operation remains correct: if something in the electronics does not function correctly, the power to the safety relay is interrupted and the power supply circuit is opened.

If there is a blackout and the system is to be restarted, if the thermostat has remained switched on, the device 1 (i.e., the control element 3) repeats the previous operations in order to verify that everything is operating correctly.

Advantageously, the device 1 (i.e., the control element 3) performs an interwoven and parallel control by monitoring both the electronics forming the control element 3 and a current control to avoid overloads.

The present invention also relates to a control method: such a control method is achievable by the controller device 1 described above (or in other words, the steps of the above method can be performed by the control element 3 and the other components of the device 1).

In particular, the steps of the method correspond to the operations performed by the control element 3 and therefore the above specifications also apply to the method which will generally be described below.

The control method is adapted to control the starting and running of an induction motor, where the induction motor is preferably a motor of a compressor in a refrigeration system.

The method comprises the steps of closing the safety means 40 before an activation of the amperometric load and performing a check of a correct operation of the control element 3.

If the check shows that the control element 3 is not functioning properly, the safety means 40 would be opened, otherwise it would remain closed. The method also includes supplying the running winding 31 and storing an initial value of operating electrical parameters (for example of the running winding itself).

At this point, the method includes supplying the starting winding to start the motor and monitoring a current value of the several times mentioned "operating electrical parameters" of the motor and comparing it as a function of the initial value of the same operating electrical parameters of the running winding: this phase includes comparing according to the methods described above, in which it is verified that the current value of one or more of such operating electrical parameters (for example, of the current) is below a predefined "first threshold" (for example, such a threshold can be 35% of the initial value of the current) or in any case that it does not exceed a further or predefined "second threshold" (which, again for example, can be 65% of the initial value of the current).

The method also includes interrupting the power supply to the motor if the monitoring shows that the current flow of one or more operating electrical parameters is greater than a predetermined value percentage of the initial value (for example, the two first and second threshold limits exemplified above).

The present invention further relates to a computer program including instructions for performing the steps of the above method: in a possible embodiment, the computer program is stored at least in the control element 3 (although according to the needs of the moment the computer program can also be stored "remotely").

In other words, the computer program can be installed or installable on the device 1 (i.e., the control element 3) or can be executed remotely, for example, by connecting the control element 3 to the internet.

The present invention further relates to a compressor, in particular for refrigeration systems, comprising a controller device 1 as described above: in other words, the compressor is provided with a control element 3 capable of carrying out the operations described above (i.e., the steps of the method described above).

Advantageously, the present invention is capable of overcoming the drawbacks arising from the prior art, allowing first of all to intervene before the occurrence of the state of so-called "thermal danger" in the windings of a motor and/or compressor and also allowing to prevent the state of danger from "degenerating", leading to the entire system (for example, the appliance in which such a compressor is installed and operating, to suffer irreversible damage at the structural level, or overheating of its contents or even fires and/or risks of electrocution, in order not to neglect any phenomena of uncontrolled propagation of the electric current outside and inside the appliance itself).

In other words, one of the main innovative aspects of the present invention with respect to the prior art is the fact that while the existing devices are set to protect against exceeding fixed and preset amperometric thresholds (and moreover, such amperometric thresholds are "suitable" for one or more motors and/or compressors, with absorptions not very far from each other), the device and the control system/method made possible by the present invention are capable of facing and managing, with equal success and with the same level of safety, variable amperometric thresholds, by way of non-limiting example at different possible initial values (which typically occur in the so-called "locked rotor" condition) of "critical" electrical quantities: this makes the applicability of the invention itself to a wide variety of electrical devices highly universal, without substantial structural or circuit or operating logic changes.

Last but not least a functional peculiarity of the invention is, as already noted, the fact that the invention itself is easily adaptable to different types of compressors (thus defining a universal type controller device 1).

## Claims

1. Controller device (1), adapted to control the starting and running of an electric motor, said electric motor being an induction motor and being a motor of a compressor in a refrigeration system, said controller device (1) comprising:
- a control element (3) which can be activated on a motor of a compressor to regulate a starting condition and a running condition thereof, said control element (3) comprising a detection element for performing a measurement of operating electrical parameters, said operating electrical parameters comprising at least one current flow, and a memory for storing said measurement of said operating electrical parameters; and
- switching means (20, 21) operatively serving said control element (3) and capable of being controlled to allow and stop a supply of electrical energy to a starting winding (30) and to a running winding (31) of said motor respectively; and
- a safety means (40) controllable by said control element (3) to open or close a supply circuit of said induction motor, said control element (3) being made in the form of a relay which can be physically opened or interrupted,
**characterized in that** said control element (3) is adapted to:
- close the safety means (40) before an activation of an amperometric load on said starting winding (30) and/or on said running winding (31);
- perform a check, preferably periodic, of a correct operation of the control element (3) itself, so that if it results from said check that said control element (3) does not operate correctly, said safety means would be opened, otherwise it would remain closed;
- supply the running winding (31);
- store an initial value of said operating electrical parameters, said initial value of operating electrical parameters comprising a current flow of the running winding (31);
- supply the starting winding (30) to start said motor;
- monitor a current value of said operating electrical parameters of the motor and compare it as a function of an initial value of the operating electrical parameters of the running winding (31); and
- interrupt the power supply to the motor, if it results from said monitoring that said current value of the motor is greater than a predetermined value.

2. Device (1) according to claim 1, wherein said control element (3) is configured to perform said control of correct operation in a continuous and pulsatile manner and to keep the safety means (40) closed as long as the operation remains correct.

3. Device (1) according to claim 1 or 2, wherein said control element is configured to open said safety means (40) after a predetermined delay from the interruption of the power supply.

4. Device (1) according to one or more of the preceding claims, wherein said control element (3) is configured to keep the safety means (40) closed and perform the control of the correct operation of the control element (3) for a predetermined time, said predetermined time preferably being between 0 milliseconds and 1000 milliseconds, before supplying the running winding (31).

5. Device (1) according to claim 4, wherein said control element (3) is configured to keep the safety means (40) closed and to perform the control of the correct operation of the control element (3) itself for a predetermined time, said predetermined time preferably being equal to 250 milliseconds.

6. Device (1) according to one or more of the preceding claims, wherein said control element (3) is configured to store said initial value of the operating electrical parameters at the running winding (31) for a storage time, said storage time preferably being between 0 milliseconds and 1000 milliseconds.

7. Device (1) according to claim 6, wherein said control element (3) is configured to store said initial value of said operating electrical parameters at the running winding (31) for a storage time, said storage time even more preferably being equal to 100 milliseconds.

8. Device (1) according to one or more of the preceding claims, wherein said control element (3) is configured to supply the starting winding (30) for a predetermined starting time, preferably 1 second.

9. Device (1) according to one or more of claims 1 to 7, wherein said control element is configured to supply the starting winding (30) for a variable starting time, said starting time preferably being variable as a function of the operating electrical parameters.

10. Device (1) according to one or more of the preceding claims, wherein said control element (3) is configured to monitor that the current value of the operating electrical parameters is not greater than a predetermined threshold, said predetermined threshold preferably corresponding to a "locked rotor" situation and even more preferably being equal to 65% of an initial value of said operating electrical parameters for a monitoring time of 4 seconds.

11. Device (1) according to one or more of the preceding claims, wherein said control element (3) is configured to monitor that the current flow value is not between a first predefined threshold and a second predefined threshold, said first and second predefined threshold preferably being equal to 35% and 65% of the initial value of the current flow for a monitoring time, said monitoring time even more preferably being fixed or variable and/or proportional to the current flow value.

12. Device (1) according to one or more of the preceding claims, wherein each of said switching means (20, 21) is circuitally associated with at least the control element (3) and is drivable by the latter between a first operating condition, in which the inflow of a supply current is allowed to the starting winding (30) and/or the running winding (31), and a second operating configuration, in which it prevents the inflow of the supply current to the starting winding (30) and/or the running winding (31).

13. Device (1) according to claim 12, wherein each of the switching means (20, 21) has a first end, connectable to one end of the starting winding (30) or of the running winding (31) and a second end, arranged to receive a control signal from the control element (3), said control signal forcing the switching means (20, 21) to go between the first and second operating conditions.

14. Device (1) according to claim 12 or 13, wherein the switching means (20, 21) comprise at least one semiconductor element.

15. Device (1) according to claims 13 and 14, wherein said semiconductor element is a triac and said second ends are a gate of said triac.

16. Control method for a controller device (1) according to one or more of the preceding claims, adapted to control the starting and running of an electric motor, said electric motor being an induction motor and a compressor motor in a refrigeration system, **characterised in that** said method comprises the steps of:
- closing the safety means (40) before an activation of an amperometric load;
- performing a check of a correct operation of the control element (3) so that if said check shows that said control element (3) is not operating properly, said safety means (40) would be opened, otherwise it would remain closed;
- supplying the running winding (31);
- storing an initial value of operating electrical parameters, said operating electrical parameters comprising a current flow of the running winding (31);
- supplying the starting winding (30) to start said motor;
- monitoring a current value of said operating electrical parameters of the motor and comparing it as a function of an initial value of the operating electrical parameters themselves; and
- stopping the power supply to the motor if it results from said monitoring that said operating electrical parameters are greater than a predetermined value with respect to an initial value of said operating electrical parameters themselves.

17. Computer program comprising instructions which, when the program is executed by a computer, cause the computer to carry out the steps of the method according to claim 16.

18. Compressor, preferably but not limitingly for refrigeration systems, **characterized in that** it comprises a controller device (1) according to one or more of claims 1 to 15 to implement a control method according to claim 16.

## Patentansprüche

1. Steuervorrichtung (1), die angepasst ist, um das Starten und Laufen eines Elektromotors zu steuern, wobei der Elektromotor ein Induktionsmotor und ein Motor eines Kompressors in einem Kühlsystem ist, wobei die Steuervorrichtung (1) Folgendes umfasst:
- ein Steuerungselement (3), das an einem Motor eines Kompressors aktiviert werden kann, um einen Startzustand und einen Betriebszustand desselben zu regeln, wobei das Steuerungselement (3) ein Detektionselement zum Durchführen einer Messung von elektrischen Betriebsparametern, wobei die elektrischen Betriebsparameter mindestens einen Stromfluss umfassen, und einen Speicher zum Speichern der Messung der elektrischen Betriebsparameter umfasst; und
- Schaltmittel (20, 21), die das Steuerungselement (3) betriebswirksam bedienen und so gesteuert werden können, dass sie eine Versorgung von elektrischer Energie zu einer Startwicklung (30) bzw. zu einer Laufwicklung (31) des Motors zulassen und stoppen; und
- ein Sicherheitsmittel (40), das durch das Steuerungselement (3) steuerbar ist, um einen Versorgungsstromkreis des Induktionsmotors zu öffnen oder zu schließen, wobei das Steuerungselement (3) in Form eines Relais ausgebildet ist, das physikalisch geöffnet oder unterbrochen werden kann,
**dadurch gekennzeichnet, dass** das Steuerungselement (3) angepasst ist zum:
- Schließen des Sicherheitsmittels (40) vor einer Aktivierung einer amperometrischen Last an der Startwicklung (30) und/oder an der Laufwicklung (31);
- Durchführen einer vorzugsweise periodischen Überprüfung eines korrekten Betriebs des Steuerungselements (3) selbst, so dass, wenn sich aus der Überprüfung ergibt, dass das Steuerungselement (3) nicht korrekt funktioniert, das Sicherheitsmittel geöffnet würde, andernfalls würde es geschlossen bleiben;
- Versorgen der Laufwicklung (31);
- Speichern eines Anfangswertes der elektrischen Betriebsparameter, wobei der Anfangswert der elektrischen Betriebsparameter einen Stromfluss der Laufwicklung (31) umfasst;
- Versorgen der Startwicklung (30) zum Starten des Motors;
- Überwachen eines aktuellen Wertes der elektrischen Betriebsparameter des Motors und Vergleichen dieses Wertes in Abhängigkeit von einem Anfangswert der elektrischen Betriebsparameter der Laufwicklung (31); und
- Unterbrechen der Stromversorgung zum Motor, wenn sich aus der Überwachung ergibt, dass der aktuelle Wert des Motors größer als ein vorgegebener Wert ist.

2. Vorrichtung (1) nach Anspruch 1, wobei das Steuerungselement (3) dazu konfiguriert ist, die Steuerung des korrekten Betriebs kontinuierlich und pulsierend durchzuführen und das Sicherheitsmittel (40) geschlossen zu halten, solange der Betrieb korrekt bleibt.

3. Vorrichtung (1) nach Anspruch 1 oder 2, wobei das Steuerungselement so konfiguriert ist, dass es das Sicherheitsmittel (40) nach einer vorbestimmten Verzögerung nach der Unterbrechung der Stromversorgung öffnet.

4. Vorrichtung (1) nach einem oder mehreren der vorhergehenden Ansprüche, wobei das Steuerungselement (3) so konfiguriert ist, dass es das Sicherheitsmittel (40) geschlossen hält und die Steuerung des korrekten Betriebs des Steuerungselements (3) für eine vorbestimmte Zeit durchführt, wobei die vorbestimmte Zeit vorzugsweise zwischen 0 Millisekunden und 1000 Millisekunden liegt, bevor die Laufwicklung (31) versorgt wird.

5. Vorrichtung (1) nach Anspruch 4, wobei das Steuerungselement (3) so konfiguriert ist, dass es das Sicherheitsmittel (40) geschlossen hält und die Steuerung des korrekten Betriebs des Steuerungselements (3) selbst für eine vorbestimmte Zeit durchführt, wobei die vorbestimmte Zeit vorzugsweise gleich 250 Millisekunden ist.

6. Vorrichtung (1) nach einem oder mehreren der vorhergehenden Ansprüche, wobei das Steuerungselement (3) konfiguriert ist, um den Anfangswert der elektrischen Betriebsparameter an der Laufwicklung (31) für eine Speicherzeit zu speichern, wobei die Speicherzeit vorzugsweise zwischen 0 Millisekunden und 1000 Millisekunden liegt.

7. Vorrichtung (1) nach Anspruch 6, wobei das Steuerungselement (3) so konfiguriert ist, dass es den Anfangswert der elektrischen Betriebsparameter an der Laufwicklung (31) für eine Speicherzeit speichert, wobei die Speicherzeit noch bevorzugter gleich 100 Millisekunden ist.

8. Vorrichtung (1) nach einem oder mehreren der vorhergehenden Ansprüche, wobei das Steuerungselement (3) so konfiguriert ist, dass es die Startwicklung (30) für eine vorbestimmte Startzeit, vorzugsweise 1 Sekunde, versorgt.

9. Vorrichtung (1) nach einem oder mehreren der Ansprüche 1 bis 7, wobei das Steuerungselement so konfiguriert ist, dass es die Startwicklung (30) für eine variable Startzeit versorgt, wobei die Startzeit vorzugsweise in Abhängigkeit von den elektrischen Betriebsparametern variabel ist.

10. Vorrichtung (1) nach einem oder mehreren der vorhergehenden Ansprüche, wobei das Steuerungselement (3) konfiguriert ist, um zu überwachen, dass der aktuelle Wert der elektrischen Betriebsparameter nicht größer als ein vorbestimmter Schwellenwert ist, wobei der vorbestimmte Schwellenwert vorzugsweise einer Situation mit "verriegeltem Rotor" entspricht und noch bevorzugter gleich 65 % eines Anfangswerts der elektrischen Betriebsparameter für eine Überwachungszeit von 4 Sekunden ist.

11. Vorrichtung (1) nach einem oder mehreren der vorhergehenden Ansprüche, wobei das Steuerungselement (3) konfiguriert ist, um zu überwachen, dass der Stromflusswert nicht zwischen einem ersten vordefinierten Schwellenwert und einem zweiten vordefinierten Schwellenwert liegt, wobei der erste und zweite vordefinierte Schwellenwert vorzugsweise gleich 35 % und 65 % des Anfangswerts des Stromflusses für eine Überwachungszeit ist, wobei die Überwachungszeit noch bevorzugter fest oder variabel und/oder proportional zu dem Stromflusswert ist.

12. Vorrichtung (1) nach einem oder mehreren der vorhergehenden Ansprüche, wobei jedes der Schaltmittel (20, 21) zumindest mit dem Steuerungselement (3) schaltungstechnisch assoziiert und von diesem zwischen einem ersten Betriebszustand, in dem der Zufluss eines Versorgungsstroms zu der Startwicklung (30) und/oder der Laufwicklung (31) zugelassen wird, und einer zweiten Betriebskonfiguration ansteuerbar ist, in der es den Zufluss des Versorgungsstroms zu der Startwicklung (30) und/oder der Laufwicklung (31) verhindert.

13. Vorrichtung (1) nach Anspruch 12, wobei jedes der Schaltmittel (20, 21) ein erstes Ende, das mit einem Ende der Startwicklung (30) oder der Laufwicklung (31) verbindbar ist, und ein zweites Ende aufweist, das angeordnet ist, um ein Steuerungssignal von dem Steuerungselement (3) zu empfangen, wobei das Steuerungssignal das Schaltmittel (20, 21) zwingt, zwischen den ersten und zweiten Betriebszustand zu wechseln.

14. Vorrichtung (1) nach Anspruch 12 oder 13, wobei die Schaltmittel (20, 21) mindestens ein Halbleiterelement umfassen.

15. Vorrichtung (1) nach Anspruch 13 und 14, wobei das Halbleiterelement ein Triac ist und die zweiten Enden ein Gate des Triacs sind.

16. Steuerungsverfahren für eine Steuervorrichtung (1) nach einem oder mehreren der vorhergehenden Ansprüche, die angepasst ist, um das Starten und Laufen eines Elektromotors zu steuern, wobei der Elektromotor ein Induktionsmotor und ein Kompressormotor in einem Kühlsystem ist, **dadurch gekennzeichnet, dass** das Verfahren die folgenden Schritte umfasst:
- Schließen des Sicherheitsmittels (40) vor einer Aktivierung einer amperometrischen Last;
- Durchführen einer Überprüfung des korrekten Betriebs des Steuerungselements (3), so dass, wenn die Überprüfung zeigt, dass das Steuerungselement (3) nicht ordnungsgemäß funktioniert, das Sicherheitsmittel (40) geöffnet würde, andernfalls würde es geschlossen bleiben;
- Versorgen der Laufwicklung (31);
- Speichern eines Anfangswertes der elektrischen Betriebsparameter, wobei die elektrischen Betriebsparameter einen Stromfluss der Laufwicklung (31) umfassen;
- Versorgen der Startwicklung (30) zum Starten des Motors;
- Überwachen eines aktuellen Wertes der elektrischen Betriebsparameter des Motors und Vergleichen dieses Wertes in Abhängigkeit von einem Anfangswert der elektrischen Betriebsparameter selbst; und
- Unterbrechen der Stromversorgung zum Motor, wenn sich aus der Überwachung ergibt, dass die elektrischen Betriebsparameter größer sind als ein vorbestimmter Wert in Bezug auf einen Anfangswert der elektrischen Betriebsparameter selbst.

17. Computerprogramm, das Anweisungen umfasst, die, wenn das Programm von einem Computer ausgeführt wird, den Computer veranlassen, die Schritte des Verfahrens nach Anspruch 16 auszuführen.

18. Kompressor, vorzugsweise aber nicht einschränkend für Kälteanlagen, **dadurch gekennzeichnet, dass** er eine Steuereinrichtung (1) nach einem oder mehreren der Ansprüche 1 bis 15 zur Durchführung eines Steuerungsverfahrens nach Anspruch 16 umfasst.

## Revendications

1. Dispositif de commande (1), adapté pour commander le démarrage et la marche d'un moteur électrique, ledit moteur électrique étant un moteur à induction et étant un moteur de compresseur dans un système de réfrigération, ledit dispositif de commande (1) comprenant :
- un élément de commande (3) qui peut être activé sur un moteur d'un compresseur pour réguler une condition de démarrage et une condition de marche de celui-ci, ledit élément de commande (3) comprenant un élément de détection pour effectuer une mesure des paramètres électriques de fonctionnement, lesdits paramètres électriques de fonctionnement comprenant au moins un flux de courant, et une mémoire pour stocker ladite mesure desdits paramètres électriques de fonctionnement ; et
- des moyens de commutation (20, 21) desservant fonctionnellement ledit élément de commande (3) et pouvant être commandés pour permettre et arrêter l'alimentation en énergie électrique d'un enroulement de démarrage (30) et d'un enroulement en marche (31) dudit moteur, respectivement ; et
- un moyen de sécurité (40) contrôlable par ledit élément de commande (3) pour ouvrir ou fermer un circuit d'alimentation dudit moteur à induction, ledit élément de commande (3) étant réalisé sous la forme d'un relais qui peut être physiquement ouvert ou interrompu,
**caractérisé par le fait que** ledit élément de commande (3) est adapté pour :
- fermer le moyen de sécurité (40) avant une activation d'une charge ampérométrique sur ledit enroulement de démarrage (30) et/ou sur ledit enroulement en marche (31) ;
- effectuer un contrôle, de préférence périodique, du fonctionnement correct de l'élément de commande (3) lui-même, de sorte que s'il résulte dudit contrôle que ledit élément de commande (3) ne fonctionne pas correctement, ledit moyen de sécurité s'ouvre, sinon il reste fermé ;
- alimenter l'enroulement en marche (31) ;
- stocker une valeur initiale desdits paramètres électriques de fonctionnement, ladite valeur initiale des paramètres électriques de fonctionnement comprenant un flux de courant de l'enroulement en marche (31) ;
- alimenter le bobinage de démarrage (30) pour démarrer ledit moteur ;
- surveiller une valeur actuelle desdits paramètres électriques de fonctionnement du moteur et la comparer en fonction d'une valeur initiale des paramètres électriques de fonctionnement de l'enroulement en marche (31) ; et
- interrompre l'alimentation du moteur, s'il résulte de ladite surveillance que ladite valeur de courant du moteur est supérieure à une valeur prédéterminée.

2. Dispositif (1) selon la revendication 1, dans lequel ledit élément de commande (3) est configuré pour effectuer ce contrôle de fonctionnement correct de manière continue et pulsatile et pour maintenir le moyen de sécurité (40) fermé tant que le fonctionnement reste correct.

3. Dispositif (1) selon la revendication 1 ou 2, dans lequel ledit élément de commande est configuré pour ouvrir ledit moyen de sécurité (40) après un délai prédéterminé à partir de l'interruption de l'alimentation électrique.

4. Dispositif (1) selon l'une ou plusieurs des revendications précédentes, dans lequel ledit élément de commande (3) est configuré pour maintenir le moyen de sécurité (40) fermé et effectuer le contrôle du fonctionnement correct de l'élément de commande (3) pendant un temps prédéterminé, ledit temps prédéterminé étant de préférence compris entre 0 milliseconde et 1 000 millisecondes, avant d'alimenter l'enroulement en marche (31).

5. Dispositif (1) selon la revendication 4, dans lequel ledit élément de commande (3) est configuré pour maintenir le moyen de sécurité (40) fermé et pour effectuer le contrôle du fonctionnement correct de l'élément de commande (3) lui-même pendant un temps prédéterminé, ce temps prédéterminé étant de préférence égal à 250 millisecondes.

6. Dispositif (1) selon une ou plusieurs des revendications précédentes, dans lequel ledit élément de commande (3) est configuré pour stocker ladite valeur initiale des paramètres électriques de fonctionnement au niveau de l'enroulement en marche (31) pendant un temps de stockage, ledit temps de stockage étant de préférence compris entre 0 milliseconde et 1 000 millisecondes.

7. Dispositif (1) selon la revendication 6, dans lequel ledit élément de commande (3) est configuré pour stocker ladite valeur initiale desdits paramètres électriques de fonctionnement au niveau de l'enroulement en marche (31) pendant un temps de stockage, ledit temps de stockage étant encore plus préférablement égal à 100 millisecondes.

8. Dispositif (1) selon l'une ou plusieurs des revendications précédentes, dans lequel ledit élément de commande (3) est configuré pour alimenter le bobinage de démarrage (30) pendant un temps de démarrage prédéterminé, de préférence 1 seconde.

9. Dispositif (1) selon une ou plusieurs des revendications 1 à 7, dans lequel ledit élément de commande est configuré pour alimenter le bobinage de démarrage (30) pendant un temps de démarrage variable, ledit temps de démarrage étant de préférence variable en fonction des paramètres électriques de fonctionnement.

10. Dispositif (1) selon une ou plusieurs des revendications précédentes, dans lequel ledit élément de contrôle (3) est configuré pour surveiller que la valeur courante des paramètres électriques de fonctionnement n'est pas supérieure à un seuil prédéterminé, ledit seuil prédéterminé correspondant de préférence à une situation de "rotor bloqué" et de manière encore plus préférée étant égal à 65 % d'une valeur initiale desdits paramètres électriques de fonctionnement pour un temps de surveillance de 4 secondes.

11. Dispositif (1) selon une ou plusieurs des revendications précédentes, dans lequel ledit élément de contrôle (3) est configuré pour surveiller que la valeur du débit courant n'est pas comprise entre un premier seuil prédéfini et un deuxième seuil prédéfini, lesdits premier et deuxième seuils prédéfinis étant de préférence égaux à 35 % et 65 % de la valeur initiale du débit courant pour un temps de surveillance, ledit temps de surveillance étant encore plus préférentiellement fixe ou variable et/ou proportionnel à la valeur du débit courant.

12. Dispositif (1) selon l'une ou plusieurs des revendications précédentes, dans lequel chacun de ces moyens de commutation (20, 21) est associé par circuit à au moins l'élément de commande (3) et peut être commandé par ce dernier entre un premier état de fonctionnement, dans lequel l'arrivée d'un courant d'alimentation est autorisée dans l'enroulement de démarrage (30) et/ou l'enroulement en marche (31), et une deuxième configuration de fonctionnement, dans laquelle il empêche l'arrivée du courant d'alimentation dans l'enroulement de démarrage (30) et/ou l'enroulement en marche (31).

13. Dispositif (1) selon la revendication 12, dans lequel chacun des moyens de commutation (20, 21) a une première extrémité, connectable à une extrémité de l'enroulement de démarrage (30) ou de l'enroulement en marche (31) et une deuxième extrémité, agencée pour recevoir un signal de commande de l'élément de commande (3), ledit signal de commande forçant les moyens de commutation (20, 21) à passer entre le premier et le deuxième état de fonctionnement.

14. Dispositif (1) selon la revendication 12 ou 13, dans lequel les moyens de commutation (20, 21) comprennent au moins un élément semi-conducteur.

15. Dispositif (1) selon les revendications 13 et 14, dans lequel ledit élément semi-conducteur est un triac et lesdites deuxièmes extrémités sont une grille dudit triac.

16. Procédé de commande d'un dispositif de commande (1) selon l'une ou plusieurs des revendications précédentes, adapté pour commander le démarrage et la marche d'un moteur électrique, ledit moteur électrique étant un moteur à induction et un moteur de compresseur dans un système de réfrigération, **caractérisé en ce que** ledit procédé comprend les étapes suivantes :
- la fermeture du dispositif de sécurité (40) avant l'activation d'une charge ampérométrique ;
- effectuer un contrôle du fonctionnement correct de l'élément de commande (3) de sorte que si ce contrôle montre que l'élément de commande (3) ne fonctionne pas correctement, le moyen de sécurité (40) s'ouvre, sinon **il** reste fermé ;
- alimentant l'enroulement en marche (31) ;
- stocker une valeur initiale des paramètres électriques de fonctionnement, lesdits paramètres électriques de fonctionnement comprenant un flux de courant de l'enroulement en marche (31) ;
- alimenter le bobinage de démarrage (30) pour démarrer ledit moteur ;
- surveiller une valeur courante desdits paramètres électriques de fonctionnement du moteur et la comparer en fonction d'une valeur initiale des paramètres électriques de fonctionnement eux-mêmes ; et
- arrêter l'alimentation du moteur s'il résulte de ladite surveillance que lesdits paramètres électriques de fonctionnement sont supérieurs à une valeur prédéterminée par rapport à une valeur initiale desdits paramètres électriques de fonctionnement eux-mêmes.

17. Programme informatique comprenant des instructions qui, lorsque le programme est exécuté par un ordinateur, amènent l'ordinateur à exécuter le procédé selon la revendication 16.

18. Compresseur, de préférence mais non limitativement pour systèmes de réfrigération, **caractérisé en ce qu'**il comprend un dispositif de commande (1) selon l'une ou plusieurs des revendications 1 à 15 pour mettre en œuvre un procédé de commande selon la revendication 16.
